# EUROPEAN PATENT APPLICATION

(11) **EP 1 708 131 A1**
(43) Date of publication of application: **04.10.2006**
(21) Application number: 04793136.5
(22) Date of filing: 28.10.2004
(51) Int. Cl.: G06Q 10/00

(54) **WORKER-IN-CHARGE COMMAND SYSTEM AND WORKER-IN-CHARGE COMMAND METHOD**

(30) Priority: 31.10.2003 JP 2003371887
(71) Applicant: MATSUSHITA ELECTRIC INDUSTRIAL CO., LTD., Kadoma-shi, Osaka 571-8501 (JP)
(72) Inventor: FUKAMACHI, Masahiro, Matsushita El. Ind. Co. Ltd., Osaka 571-8501 (JP); NAKAMURA, Kyogo, c/o Matsushita El. Ind. Co. Ltd., Osaka 571-8501 (JP)
(74) Representative: Haley, Stephen
(86) International application number: PCT/JP2004/016028
(87) International publication number: WO 2005/043434

(57) **Abstract**

A central processing unit (11) in a call center receives a work request (for example, repair of a home electric appliance) of a client, allocates a worker in charge satisfying a predetermined condition based on the work contents for the received work request, and determines articles needed for the work. The central processing unit (11) then creates work information on the work contents and the articles on one work day for each worker, creates map information including position information on the work place where the work is carried out in association with the work information and the visit order of the work places to which each worker visits on the work day, and sends the work information and the map information to the mobile terminal (51) of each worker. Technicians receive the work information and the map information from the central processing unit, ascertain the work schedules, visit the indicated work places in order, and carry out the works.

## Description

### Technical Field

The present invention relates to a worker-in-charge command system which determines a worker who takes charge of a request from a client and creates an instruction according to the request and automatically transmits the instruction to the worker.

### Background Art

Since a technician who repairs or sets a home electronic appliance and the like according to a request from a client has a large service area in general, the service area is divided into a plurality of blocks and a base point (basiness office and the like) is positioned in each block.

A plurality of workers in charge (servicemen or technicians) who perform operations such as repairing actually belong to each base point. In addition, parts, materials, equipments and the like to be used in the repairing are stored in each base point.

A request receiving base point called a call center is provided in the repair service, and it collectively receives a work request for repairing, setting, maintaining, checking an home electronic appliance or the like from a client through a telephone or FAX, and transmits instruction information according to the request contents to a base point corresponding to the work place for the request. When the base point receives the instruction information from the call center, it determines a worker in charge according to the contents. In addition, a method or a system for allocating a worker in charge to a place or a work is disclosed in Patent Documents 1, 2, 3, and, 4 (Japanese Patent Laid-Open Publication No.2002-312550, Japanese Patent Laid-Open Publication No.2003-108716, Japanese Patent Laid-Open Publication No.2002-366635 and Japanese Patent Laid-Open Publication No.11-066172).

In general, several pieces of instruction information are transmitted to each base point and those are organized in the base point so that a worker in charge is determined and its work schedule is set.

Since the work schedule is created in the base point, the worker in charge has to go to the base point once before the work to receive and ascertain the work schedule on that day and prepare parts required for the work such as repairing and heads for a place conventionally. The worker visits clients in order according to the work schedule on that day and after he finishes all of the works, he returns to the base point and reports the works he made on that day.

Patent Document 1: Japanese Patent Laid-Open Publication No.2002-312550
Patent Document 2: Japanese Patent Laid-Open Publication No.2003-108716
Patent Document 3: Japanese Patent Laid-Open Publication No.2002-366635
Patent Document 4: Japanese Patent Laid-Open Publication No.11-066172

### Disclosure of the invention

### Problem to be resolved by the invention

As described above, since the plurality of base points are arranged so as to cover the whole service area conventionally, it costs a lot to set and maintain the base points. In addition, since each worker in charge (technician in charge) has to go to the base point to which the worker belongs once to get information regarding clients to visit and works such as repairing contents, and report the result of the works after the work. Thus, even when the worker lives close to the client to visit, he has to go through the base point, which lowers working efficiency.

The present invention was made to solve the above problem and it is an object of the present invention to provide a worker in charge command system which determines a worker in charge according to a work request such as repairing from a client, and directly instructs the worker without involving a base point.

### Means to solve the problems

A worker in charge command system according to the present invention comprises a central processing unit. The central processing unit comprises inputting means for inputting a work request comprising at least work contents and a work place; worker in charge determining means for determining a worker in charge who satisfies a predetermined condition based on the work contents for each received work request; article determining means for determining an article needed for the work; work information creating means for creating work in formation comprising the work contents and the article needed for the work on one working day for each worker; map information creating means for creating map information comprising position information of the work place and a visit order of the work places on the working day in association with the work information; and transmitting means for transmitting the created work information and the map information to each worker.

The worker in charge command system may further comprise a mobile terminal comprising means for receiving the work information and the map information transmitted from the transmitting means and means for inputting and transmitting predetermined information when the worker in charge completes the work.

A worker in charge command method according to the present invention comprises a receiving step of receiving a work request comprising at least work contents and a work place; a worker in charge determining step of determining a worker in charge who satisfies a predetermined condition based on the work contents for each received work request; an article determining step of determining an article needed for each work; a work information creating step of creating work information comprising the work contents and the article needed for the work on one working day for each worker in charge; a map information creating step of creating map information comprising position information of the work place and a visit order of the work places on the working day in association with the work information; and a transmitting step of transmitting the created work information and the map information to each worker in charge.

### Effects of the invention

According to the present invention, since the appropriate worker in charge is determined based on the request from the client, and the information regarding the part needed for the work and the visiting route are created automatically and directly transmitted to the worker in charge through a communication line, each worker in charge can get the work schedule and the like without going to the base point, so that work efficiency is improved. In addition, since the base point is not necessary as is conventionally done, the costs for maintaining and managing the base point can be reduced.

### Brief Description of Drawings

Fig. 1 is a diagram of a configuration of a worker in charge command system according to the present invention;
Fig. 2 is a diagram of a configuration of a central processing unit;
Fig. 3 is a diagram of a dynamics information transmitter;
Fig. 4A is a diagram of a format of an area database, Fig. 4B is a diagram of a format of an adjacent block database, and Fig. 4C is a diagram of a format of a technician skill database;
Fig. 5A is a diagram of a format of an all technician work database, Fig. 5B is a diagram of a format of a malfunction database, Fig. 5C is a diagram of a format of a repair parts database, and Fig. 5D is a diagram of a format of a client database;
Fig. 6 is a diagram for explaining a flow of a whole process;
Fig. 7 is a diagram for explaining a format of inputted client information;
Fig. 8 is a flowchart of reception/instruction creating processes;
Fig. 9 is a diagram of a reception input screen;
Fig. 10 is a diagram of a format of repair information;
Fig. 11 is a flowchart of a technician specifying process in the reception/instruction creating processes;
Fig. 12 is a flowchart of a part specifying process in the reception/instruction creating processes;
Fig. 13 is a flowchart of a visiting route determining process in the reception/instruction creating processes;
Fig. 14 is a diagram of a format of map information;
Fig. 15 is a flowchart of a process of a mobile terminal;
Fig. 16 is a diagram of a technician schedule reference screen displayed on the mobile terminal;
Fig. 17 is a diagram of a screen showing detailed situations displayed on the mobile terminal;
Fig. 18 is a diagram of an input screen showing repairing situations displayed on the mobile terminal;
Fig. 19 is a flowchart of a dynamics managing process;
Fig. 20 is a flowchart of a process in the central processing unit when a work is completed;
Fig. 21 is a diagram of an example of a communication sheet;
Fig. 22 is a diagram of a configuration of a central processing unit comprising an optimal area setting DB;
Fig. 23 is a diagram of a format of the optimal area setting database;
Fig. 24 is a diagram of a monthly work record table;
Fig. 25 is a schematic diagram of a relation between a section of a block and a zip code;
Figs. 26A and 26B are schematic diagrams of a relation of the adjacent blocks in view of movability;
Fig. 27 is a flowchart for optimizing the area DB and the adjacent area DB;
Fig. 28 is a schematic diagram of sections of a service area;
Fig. 29 is a diagram of a configuration of a worker in charge command system using a mobile phone; and
Fig. 30 is a flowchart of a process of the mobile phone.

### Explanation of reference numerals and signs in the drawings

- 11: central processing unit
- 15,16: operator's terminals
- 21: reception/instruction creating unit of the central processing unit
- 23: dynamics managing unit of the central processing unit
- 25: data recording unit
- 31: area database
- 32: adjacent block database
- 33: technician skill database
- 34: all technicians work schedules DB
- 35: malfunction database
- 36: repair parts database
- 37: client database
- 38: optimal area setting database
- 51: mobile terminal
- 53: dynamics information transmitter
- 54: navigation system
- 61: mobile phone
- 62: mobile display
- 63: mobile printer
- 70: communication line

### Best mode for carrying out the invention

A worker in charge command system according to the present invention will be described with reference to the drawings hereinafter.

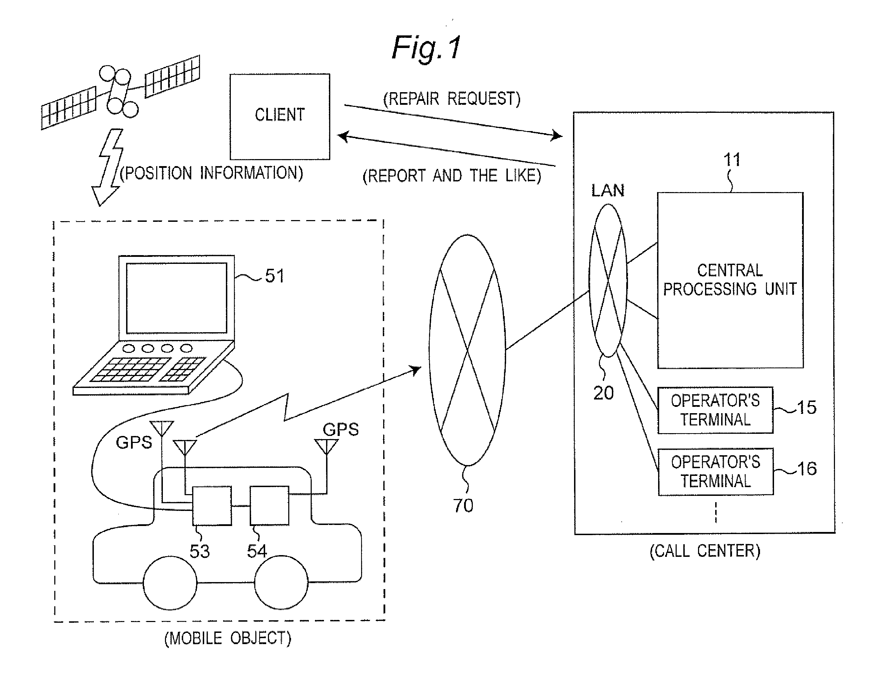

<Embodiment 1>
1. System configuration
   Fig. 1 shows a configuration of a worker in charge command system according to the present invention. The worker in charge command system comprises a central processing unit 11 placed on the side of a call center which receives a repair request from a client, and a mobile terminal 51, a dynamics information transmitter 53, and a navigation system 54 placed on the side of an technician in charge (a worker in charge). The mobile terminal 51, the dynamics information transmitter 53 and the navigation system 54 are placed in a mobile object (that is, a service car). Here, the repair request from the client is sent to the call center through a retailer such as a home electric appliance mass retailer in general.

The central processing unit 11 comprises a host computer, for example and implements a function that will be described below by executing a predetermined program. In addition, the central processing unit 11 is connected to a predetermined communication line 70. The predetermined communication line 70 includes a "DoPa" which is a packet communication service for a mobile phone provided by NTT DoCoMo, for example. The central processing unit 11 is connected to a network 20 such as a LAN provided in the call center and can communicate with operator's terminals 15, 16, ... through the network 20. Data can be inputted, dynamics can be displayed, and an instruction is operated on the central processing unit 11 through the operator's terminals 15, 16, ... connected to the central processing unit 11.

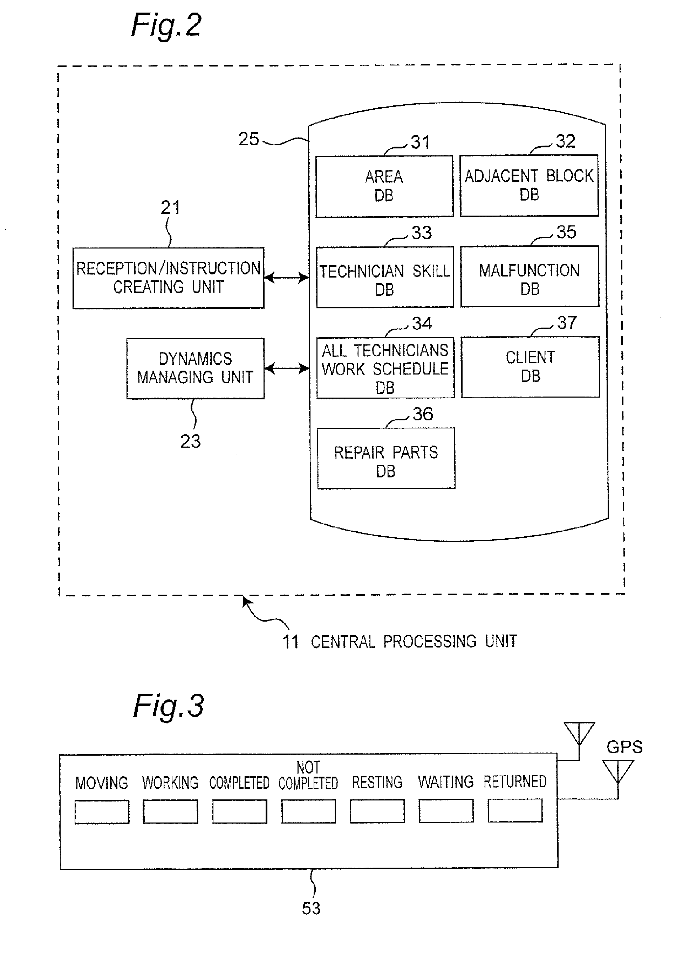

Fig. 2 shows a configuration of the central processing unit 11. The central processing unit 11 comprises a reception/instruction creating unit 21 which receives a repair request, allocates an technician in charge, selects a part, and creates a visiting route (these processes are referred to as the "reception/instruction creating processes" hereinafter), a dynamics managing unit 23 which grasps a working situation when the technician does the work actually (this process is referred to as the "dynamics managing process" hereinafter), and a data recording unit 25 which stores a program, data and various kinds of databases (DB).

In addition, the dynamics information transmitter 53 in the mobile side shown in Fig. 1 comprises a plurality of buttons as shown in Fig. 3, and when any button is pressed, information regarding that button is transmitted. Each button corresponds to a working situation. The working situation includes "moving", "working", "completed", "not completed", "resting", and the like. The dynamics information transmitter 53 is connected to the radio communication line 70 and communicates with the central processing unit 11 through this communication line 70. In addition, the dynamics information transmitter 53 can acquire position information on the current location such as latitude and longitude information using the GPS.

The mobile terminal 51 comprises a general mobile personal computer, for example and implements a function that will be described below by executing a predetermined program. The mobile terminal 51 is connected to the dynamics information transmitter 53 through a USB cable and communicates with the dynamics information transmitter 53, so that it can communicate with the central processing unit 11 through the dynamics information transmitter 53.

The navigation system 54 shown in Fig. 1 has the same function as that of a general car navigation system, and displays a route according to inputted data to guide a worker in charge to a work place. The navigation system 54 is connected to the dynamics information transmitter 53, so that it can receive position information on the work place to visit from the dynamics information transmitter 53.

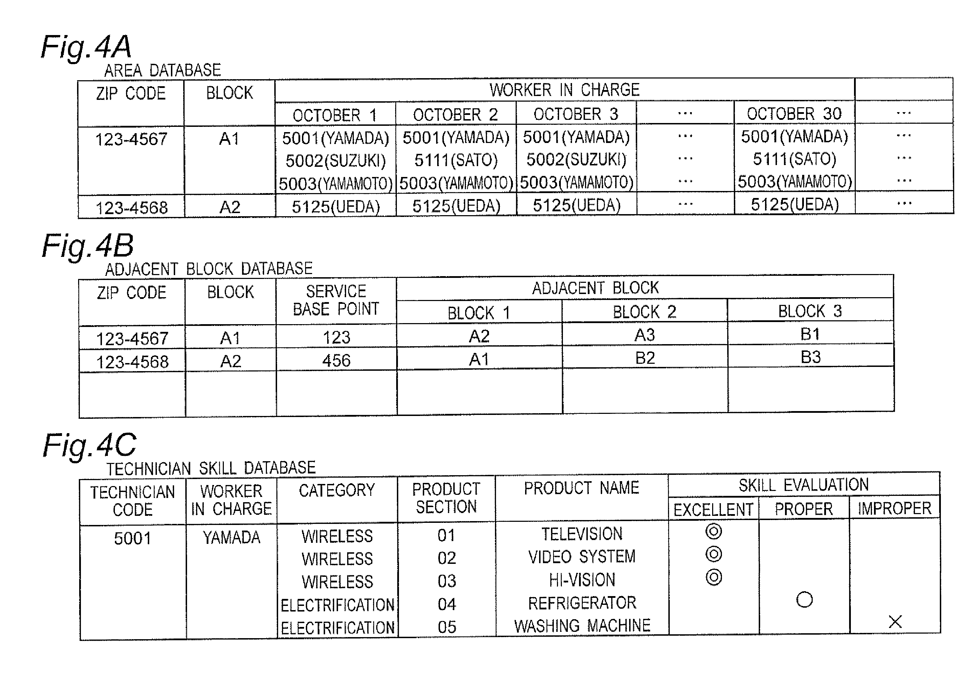

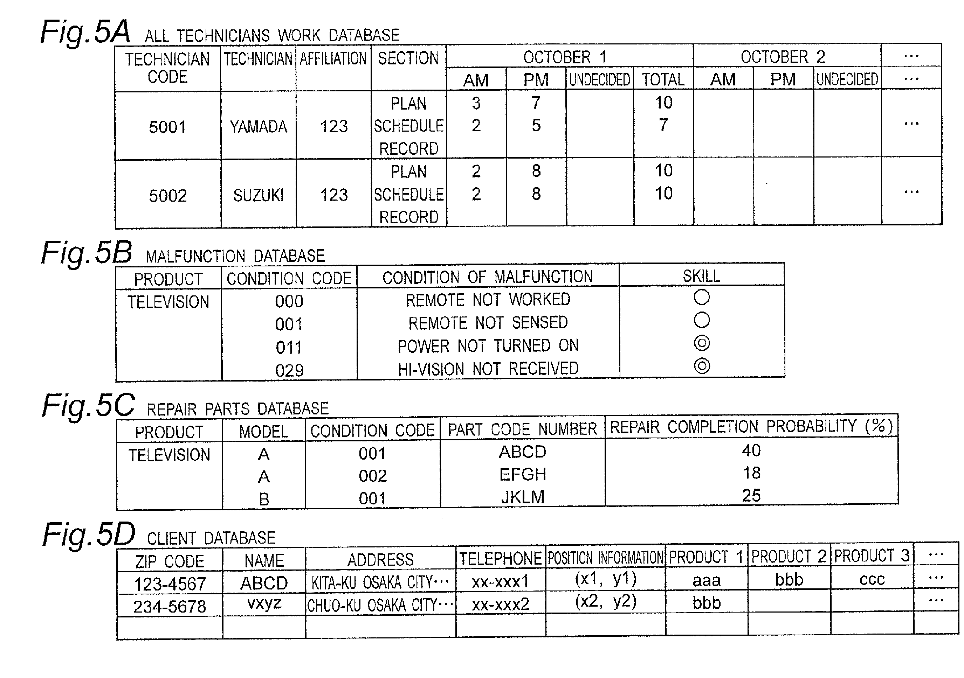

Next, a description will be made of the various kinds of databases (referred to as the "DB" hereinafter) shown in Fig. 2 which are used in this worker in charge command system. Figs. 4A, 4B, 4C, 5A, 5B, 5C, and 5D show formats of the databases and data examples.

* Area DB (31):
Referring to Fig. 4A, a service area is divided into a plurality of blocks and a worker in charge in the block is managed every day in view of his working day. A plurality of workers in charge are allocated to each block according to priority in principle.

* Adjacent block DB (32):
Referring to Fig. 4B, information on blocks adjacent to a certain block is managed according to priority. According to an example in Fig. 4B, as adjacent blocks of a block A1, a block A2, a block A3 and a block B1 are prioritized in this order.

* Engineer skill DB (33):
Referring to Fig. 4C, a skill of each technician is managed. Namely, the skill (specialized knowledge and technique) of each technician is managed with respect to each product. That is, the skill is managed with respect to each product category and product section.

* All technician work schedule DB (34):
Referring to Fig. 5A, work schedules for all technicians are managed. The number of daily works for each technician is managed.

* Malfunction DB (35):
Referring to Fig. 5B, contents of malfunctions are managed. A condition code, a product, a condition of malfunction, a skill needed for the work such as repairing are related to each other and managed.

* Repair parts DB (36):
Referring to Fig. 5C, parts needed for repairing are managed. A model of a product, a condition code, a code of a part needed for dealing with the condition, and a probability of completing a work with the part are related to each other and managed.

* Client DB (37):
Referring to Fig. 5D, information from clients is managed. For example, a zip code, a name, an address, a telephone number, information of location to visit (latitude and longitude), a code of a product used in each client are managed.

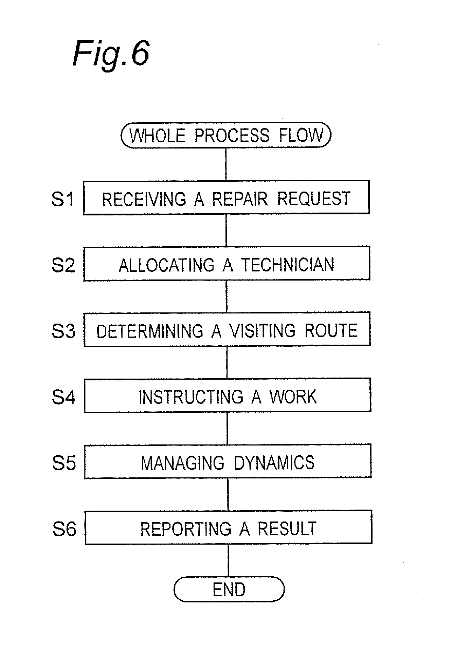

2. System operation
A description will be made of an operation of the worker in charge command system according to this embodiment hereinafter. First, a description will be made of an entire flow regarding a process performed by this system with reference to Fig. 6.

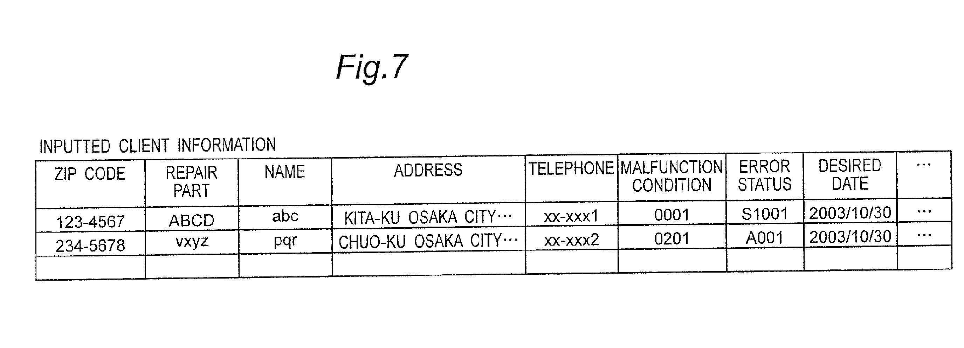

A repairing request from a client is received in the call center through a telephone, FAX, e-mail and the like at S1. When the e-mail is used, data is received in a predetermined format and a required data part is cut and inputted to the system automatically. When the telephone or FAX is used, an operator inputs information on requested contents to the central processing unit 11. In addition, when the FAX is used, data may be read by an OCR, converted to electronic data by recognizing characters and inputted to the system. It is assumed that the request is received by the telephone for the sake of simplicity of the description hereinafter. The inputted information is stored in the data recording unit 25 as inputted client information shown in Fig. 7 with respect to each request. In addition, a term "error status" in Fig. 7 means a code showing a malfunction status of a product such as a home electric appliance product.

After the request is received, an technician in charge is determined based on the inputted client information at S2, and an appropriate visiting route to a plurality of work places to visit during one day is determined for the technician at S3. Then, repairing information showing work contents is created and transmitted from the call center to each technician together with map information containing the visiting rout as a work instruction through a communication line at S4. Then, the technician visits a client to a client to perform repairing works according to the work instruction. At this time, working situations of the technician are reported to the call center through the line at S5. When the works by the technician are completed, a work result is reported to the call center and based on the result, the work result is reported from the call center to a retailer such as a home electric appliance mass retailer or the like in real time at S6. This is the entire flow. A detailed operation of this system in the above flow will be described hereinafter.

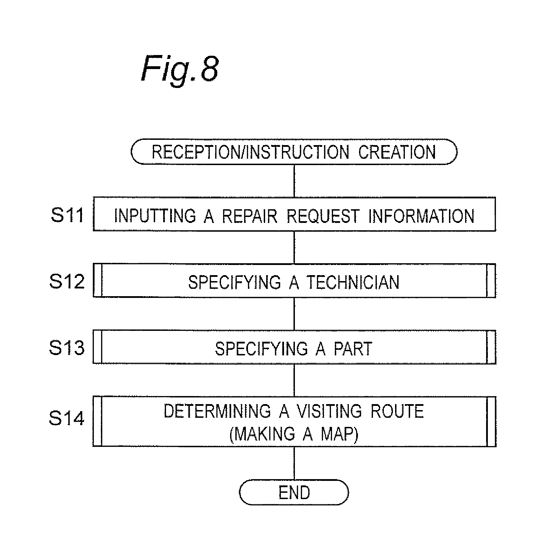

(Reception/instruction creating processes)
The processes until the work instruction is created based on the request from the client to the call center are performed by the reception/instruction creating unit 21 of the central processing unit 11. These processes will be described with reference to a flowchart shown in Fig. 8.

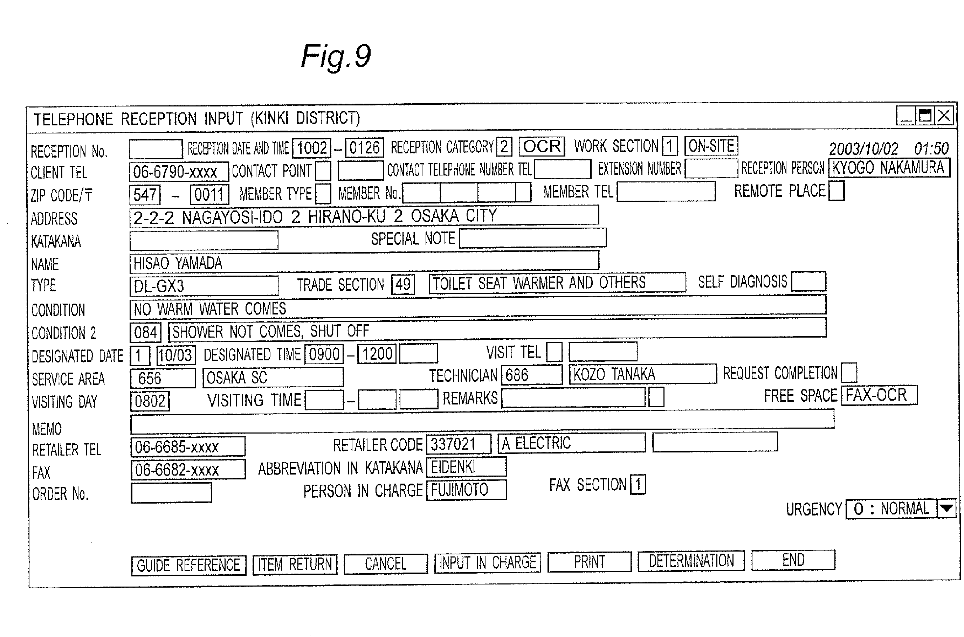

When the repairing request is sent from the client to the operator in the call center, information on a name, an address, a telephone number, a product name and a model of a product to be repaired, a malfunction condition, an error display, a preferred date to visit, a time to visit and the like (referred to as the "request information" hereinafter) is inputted to the central processing unit 11. The information is inputted using an input screen (refer to Fig. 9) displayed on the operator's terminal connected to the central processing unit 11 at S11. The inputted information is stored as the inputted client information shown in Fig. 7. In addition, the work request to the call center may be made from the client directly or made through a retailer such as a mass retailer or the like. The address of the client is equal to the address of the work place to visit (for repairing).

When the request information is all inputted, the central processing unit 11 searches and selects the most appropriate technician as a worker in charge based on the address of the client, the date and time to visit and the skill of the technician at S12. This process will be described below.

Then, a part to be needed for repairing the malfunction is specified based on the product to be repaired and the condition of the malfunction at S13. This process will be described below.

Then, an appropriate visit order, that is, a route to the work places on that day for repairing is determined with reference to each location and required time (designated time) to visit at S14. This process will be described below.

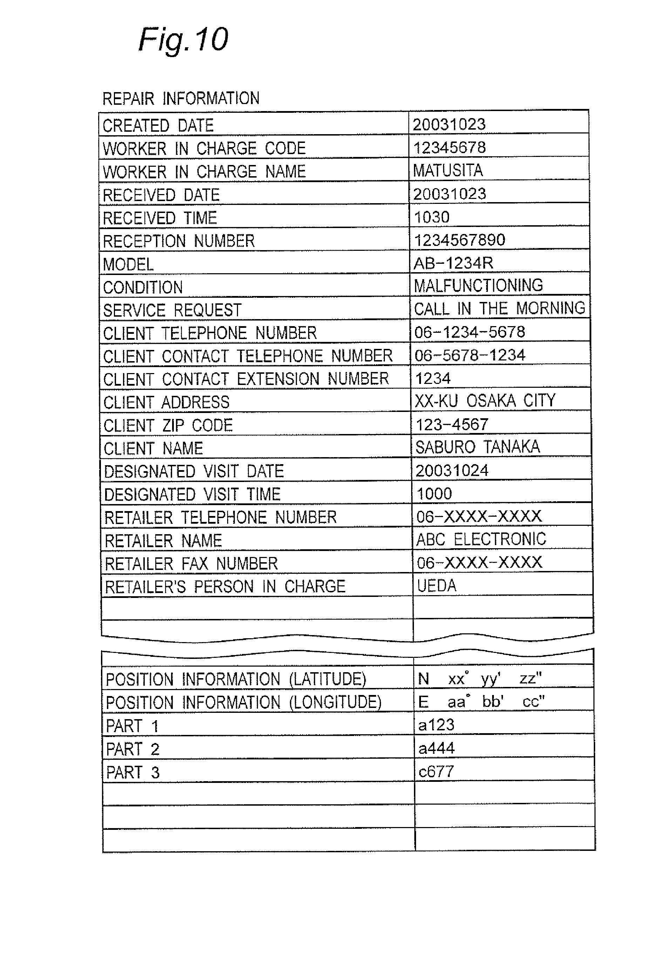

Thus, the repair information comprising the work place to visit (client address), the repair contents (condition), the technician in charge, the part needed for repairing and the like is created. Fig. 10 shows a format of the repair information. Then, only information regarding a work for the next day is picked up from that information for each technician to create repair information to be transmitted. Furthermore, necessary information is picked up from a visiting schedule DB (which will be described below) to form map information for each technician. The information to be transmitted is created at a predetermined time (about 18:00, for example) after the request is made on the day before the work day, for example.

The above processes at steps S12 to S14 will be described more in detail.

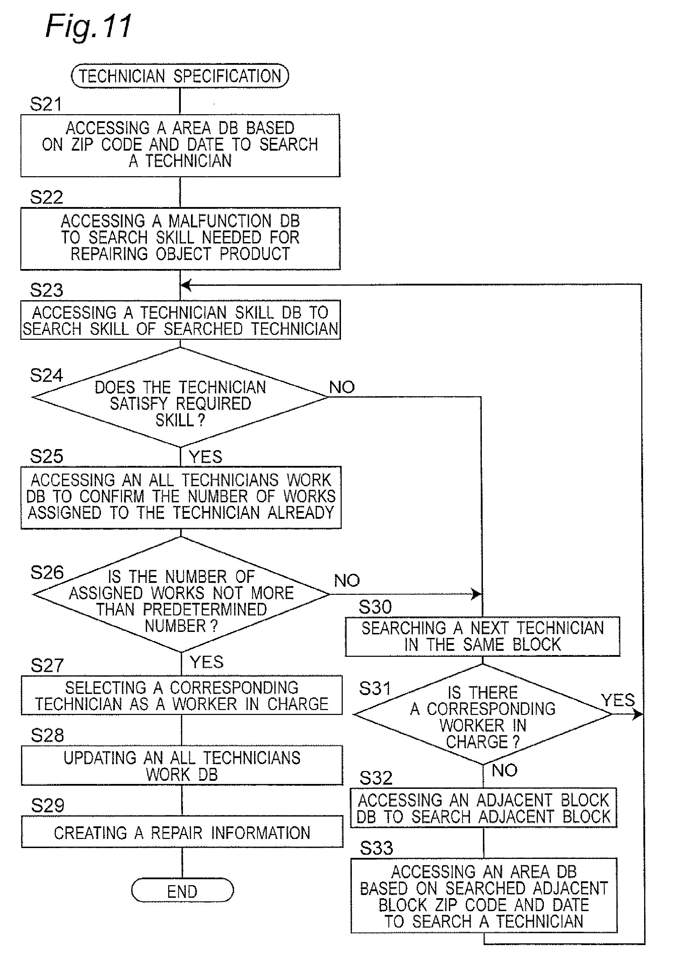

(Process for specifying a technician)
A description will be made of the technician specifying process at the step S12 in detail with reference to Fig. 11.
First, the area DB31 is accessed based on the zip code in the inputted client information and the desired day designated by the client and an appropriate technician is searched at S21. When there are some appropriate technicians, a technician having the highest priority is selected.

Then, the malfunction DB35 is accessed based on the condition code in the inputted client information and a skill needed for repairing an object product is searched at S22. Then, the technician skill DB33 is accessed and a skill needed for repairing the object product of the searched technician is searched at S23. Then, it is determined whether the skill of the selected technician satisfies the skill needed for repairing or not at S24.

When the technician has the skill needed for repairing, the all technician work DB34 is accessed based on the technician code of the technician and the requested date to visit to examine the number of work schedules of the technician on that day at S25. Then, it is determined whether the number is not more than a predetermined number or not at S26. This number is set to an upper limit value of the number of visits (8 visits, for example) which can be performed by one normal technician during one day. Thus, the limit value is set to prevent the works from concentrating on one technician and to reduce burden of the technician.

When the number of schedules is not more than the predetermined number at the step S26, the selected technician is determined as the worker in charge at S27. Then, the all technician work DB34 of that technician is updated at S28 and the repair information containing the work contents is created at S29.

Meanwhile, when it is determined that the selected technician does not have the required skill at the step S24, or when it is determined that the number of schedules is more than the predetermined number at the step S26, the area DB is accessed and the next technician is searched in the same block at S30. When an appropriate technician is selected, the processes at the steps S23 to S29 are performed for that technician as stated above.

In case that an appropriate technician is not found at the step S31, a block adjacent to that block is searched with reference to the adjacent block DB32 at S32, and an appropriate technician is searched in the searched block at S33. Thus, similar to the above, the processes at steps S23 to S29 are performed. In addition, the technician having high priority is to be selected from the adjacent block. For example, according to the example shown in Fig. 4B, it is determined whether a block A2 as an adjacent block of the block A1 has an appropriate technician or not, and when there is no appropriate technician in the block A2, an adjacent block A3 and the adjacent block B1 are examined in this order.

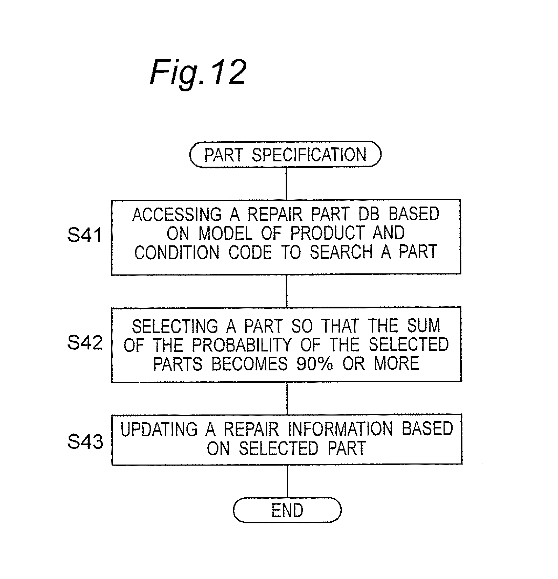

(Process for specifying a part)
The process for specifying the part at the step S13 will be described in detail with reference to Fig. 12. The repair parts DB36 is accessed based on the model of the product and the condition code in the inputted client information and a part needed for repairing is searched at S41. At this time, a needed part is selected from parts having a higher repairing provability, and one or more parts are selected so that an accumulative repair completion probability may become more than 90% at S42. Thus, since the part is selected so that the accumulative repair completion probability becomes more than a predetermined value (90%), a probability of completing the work on one visit can be increased. The repair completion probability of the part can be set based on past records. Then, the repair information is updated according to the selected part at S43.

The information on the selected repair part is sent to a part management section to order the part. The ordered part is prepared to be arrived at a place designated by the technician in charge before a predetermined time (9 AM, for example) on the next day.

In addition, although the part needed for repairing is selected from the condition code in this example, an article or information regarding the work such as a tool, an equipment, an apparatus, or a manual may be selected besides the part.

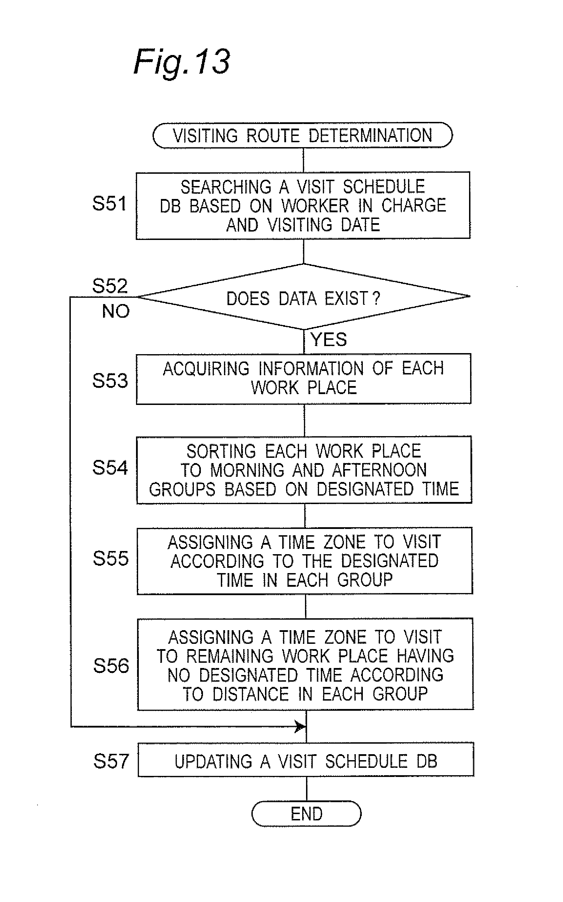

(Process for determining a visiting route)
A description will be made of the visiting route determination process at the step S14 in detail with reference to Fig. 13.
According to this process, in addition to geographic locations of the plurality of work places to visit, an optimal visiting route is determined in view of requested visiting times from the clients.

First, the visiting schedule DB is accessed based on the worker in charge and the visiting date at S51. When there is no corresponding data (No at S52), new data on the address of the client in the inputted information and the like is added to the visiting schedule DB at S57. In addition, a worker in charge (technician), a visiting date, a name (text) to visit, an address (text) to visit, information on a position (latitude and longitude) to visit, a designated time, a time needed for repairing, a visit order and the like are managed in the visiting schedule DB.

When corresponding data is found (YES at S52), the information to visit (the position information, the designated time, the time needed for repairing and the like) allotted to each worker in charge is acquired at S53. Each client is sorted to a morning group and an afternoon group based on the designated times at S54. In each group, each work place to visit designating a time is allotted to a predetermined time zone based on its designated time and needed time for repairing at S55. Then, each work place which does not designate a time is allotted to a remaining time zone based on its location to visit at S56. Finally, the visiting schedule DB is updated at S57. Thus, as the work place is allotted to a certain time zone, the visit order of the work places, that is, the visiting route can be automatically determined.

The process at the steps S55 and S56 will be described more in detail. According to this embodiment, the work time is divided into a plurality of time zones every 30 minutes. The work place designating the desired time is allotted to the corresponding time zone. Then, although the work place which does not designate the desired time is allotted to the remaining time zone, at this time, the work place is allotted to the remaining time zone such that the route can be shortest based on a position relation between the work place already allotted to the time zone and the work place to be allotted.

For example, when it is assumed that there are four work places A, B, C and D in the afternoon group and the A designated the desired time at 13:00 and the B designated the desired time at 16:00, the A is allotted to the time zone of 13:00 to 13:30 and the B is allotted to the time zone of 16:00 to 16:30. Since there is a free time between the A and B, the C and D are to be allotted there such that one of the two that is closer to the A is to be visited next to the A and allotted to the time zone of 14:00 to 14:30. Then, the other is allotted to the subsequent time zone. In addition, the client is allocated to the time zone in view of the time needed for repairing. Thus, the work requiring a long time is to be allotted to a long time zone.

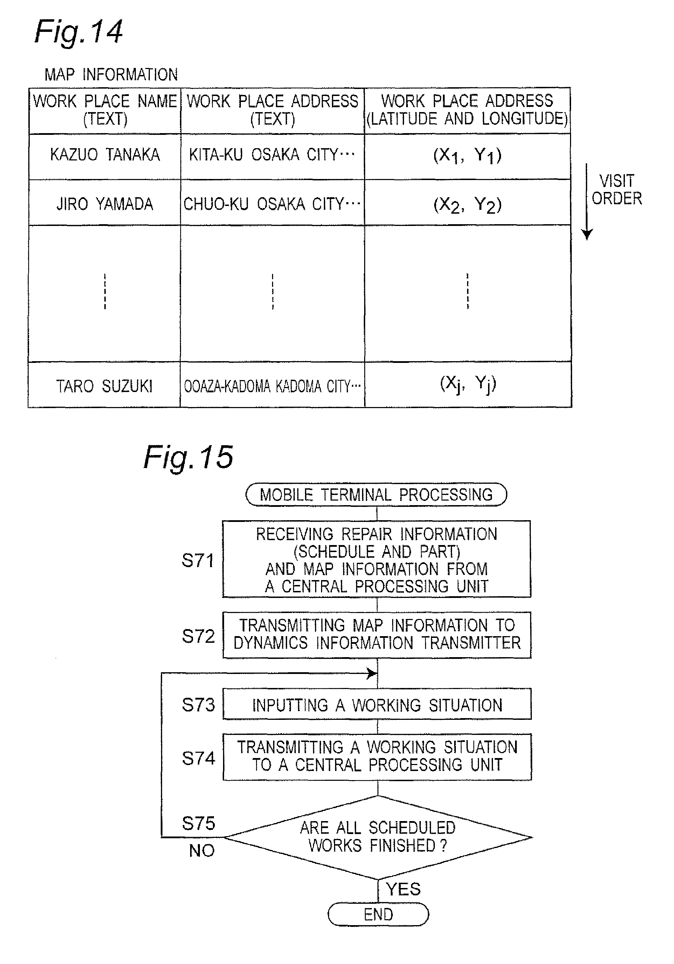

Thus, the daily visiting route is determined for each technician and its information is stored in the visiting schedule DB. Thus, on the day before the visit, the map information in which only necessary information is extracted from the visiting schedule DB is created and transmitted to each technician. The map information comprises the name, the address (text), the position information (latitude and longitude information) and the visit order. Fig. 14 shows a format of the map information during one day for one worker in charge. Its arranged order corresponds to the visit order.

Thus, the repair information comprising the contents of the repair, the parts needed for the repairing, and the like, and the map information comprising the visiting route are prepared for each worker in charge every work day. The information is transmitted to the mobile terminal 51 and the dynamics information transmitter 53 of each technician through the communication line 70 in the next morning. That is, when each technician turns on the devices 51, 53 and 54 in the service car on the morning of the work before the work is started, the technician can receive and ascertain the work schedule on that day.

(Process of a mobile terminal)
Processes of the mobile terminal 51 and the dynamics information transmitter 53 on the side of the technician will be described hereinafter. The process of the mobile terminal regarding reception of the repair information and the map information and inputting of the work contents after the work will be described with reference to Fig. 15.

When the technician operates the mobile terminal 51 to receive the repair information and the map information, the mobile terminal 51 accesses the central processing unit 11 through the dynamics information transmitter 53 and the communication line 70, and receives the repair information and the map information prepared for each worker in charge at S71. The map information comprises the text information of the client name, and the client address and the position information (latitude and longitude information) of the work place to visit which are arranged according to the visit order.

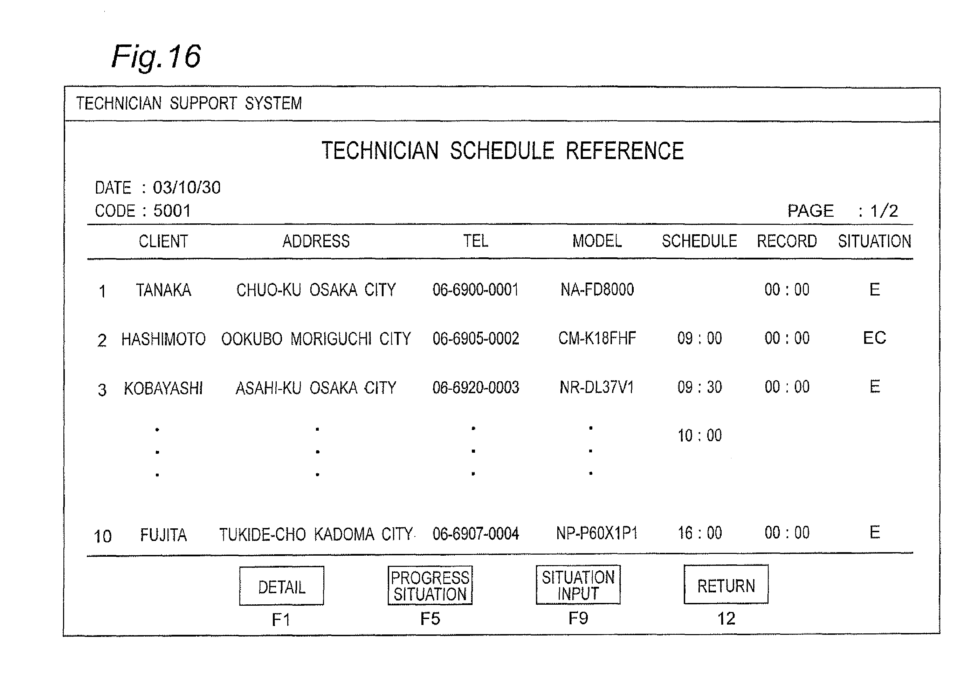

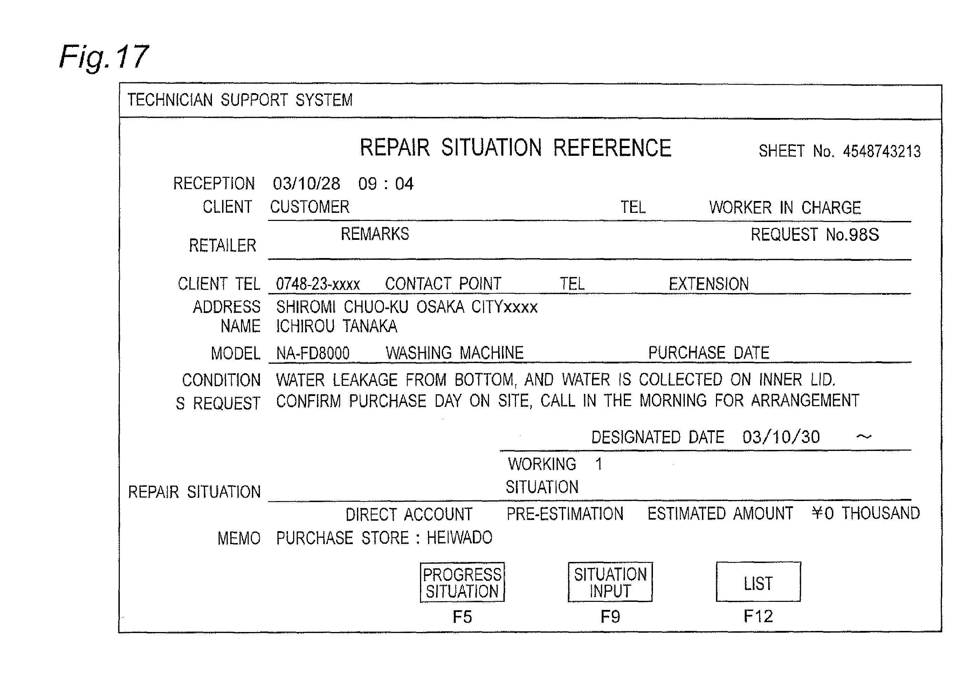

When the mobile terminal 51 completes the reception of the repair information and the map information, it transmits only the map information to the dynamics information transmitter 53 at S72. The dynamics information transmitter 53 transfers the map information to the navigation system 54. The navigation system 54 displays a route to the work place based on the latitude and longitude information contained in the map information in series. The repair information can be ascertained on the mobile terminal 51. Fig. 16 shows a display example of the schedule information displayed on the mobile terminal 51 in the mobile object. When one client is selected on this screen, detailed information for the selected client is displayed as shown in Fig. 17. Similarly, the technician can ascertain a necessary parts list on the screen. These are performed on the mobile terminal before the technician starts the work.

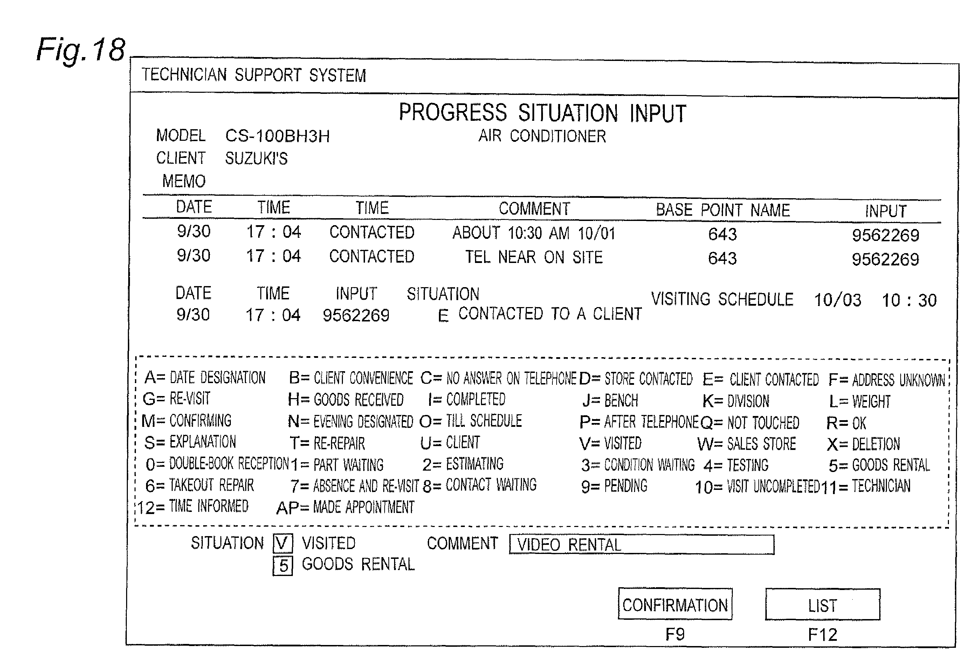

Then, the technician arrives at the work place according to the guide of the navigation system 54 to perform the repairing work there. When the repairing work is completed at the work place, the technician returns to the service car and inputs the working situation from the mobile terminal 51. Fig. 18 shows an example of a display to input the working situation displayed on the mobile terminal 51. The working situation are finely sorted and coded, so that the technician inputs a corresponding code to a predetermined input area. When the work is not completed, it is preferable to input an item such as its cause and reason, and appointment of the next visit.

When the input of the working situation on the mobile terminal 51 at S73 is completed, that information is transmitted to the dynamics information transmitter 53 and the central processing unit 11 through the communication line 70 at S74. At this time, the position information of the latitude and longitude information of the service car is added to that information by the dynamics information transmitter 53 and transmitted to the central processing unit 11. At this time, it is to be noted that the transmitted position information is not position information of the work place (the client's house) but position information of a parking lot of the service car. The central processing unit 11 updates the client DB37 using this position information. Thus, when the parking lot of the service car is stored as the position information of the client, the following merits are provided. Namely, when the technician drives to visit the client's house, since a space for parking the car does not always exist at the place of the client's house, the car is parked in a space close to the client's house in many cases. In this case, since the parking space has been stored as the information, it is not necessary to search the parking space on the next visit, so that the time and effort spent on searching the parking space can be reduced.

The above processes are performed for all scheduled clients at S73 to S75.

(Process of dynamics information transmitter)
An operation of the dynamics information transmitter 53 will be described. When a certain button is pressed, the dynamics information transmitter 53 transmits the information of that button to the central processing unit 11 together with the position information (latitude and longitude information) acquired from the GPS. For example, when the technician drives the car, the "moving" button is pressed, and when the technician starts the work, the "working" button is pressed. When the work is completed, the "completed" button is pressed and when it is not completed, the "not completed" button is pressed. In addition, the dynamics information transmitter 53 transmits the information of the pressed button and the position information (latitude and longitude) to the central processing unit 11 periodically (every 3 to 5 minutes, for example). The central processing unit 11 can grasp the location and the working situation of each technician in real time by receiving the above information.

(Process of a central processing unit regarding dynamics management)
A process of the central processing unit 11 in managing dynamics will be described. This process is performed by the dynamics managing unit 23 of the central processing unit 11.

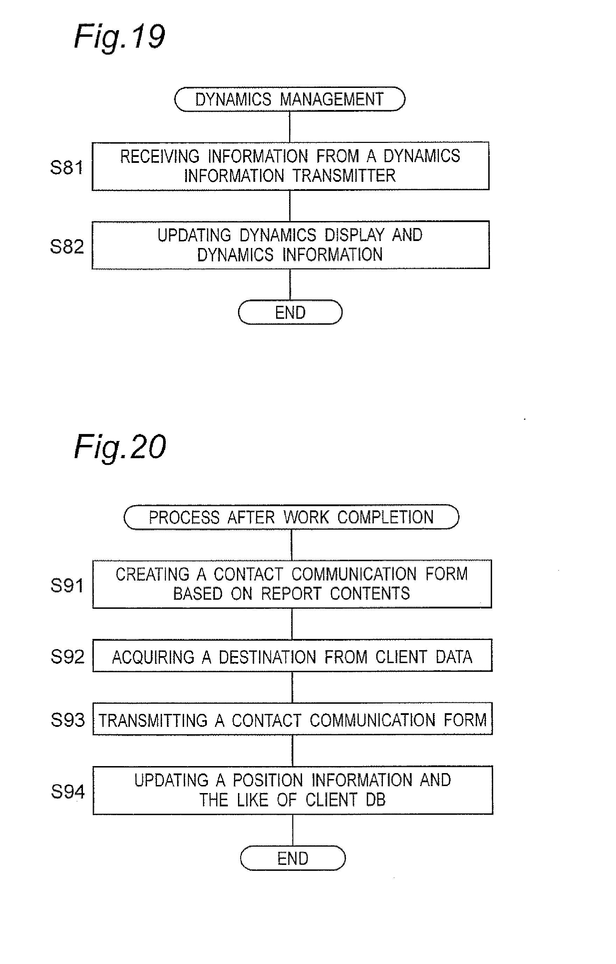

As shown in Fig. 19, when the central processing unit 11 receives the information transmitted periodically or by the operation of the technician from the dynamics information transmitter 53 at S81, it updates the dynamics information and updates the display on the operator's terminal which serves as a monitor S82. In addition, as the dynamics information, the position information at a certain point and the working situation at that point are managed for each technician. The information can be monitored on the operator's terminal in real time.

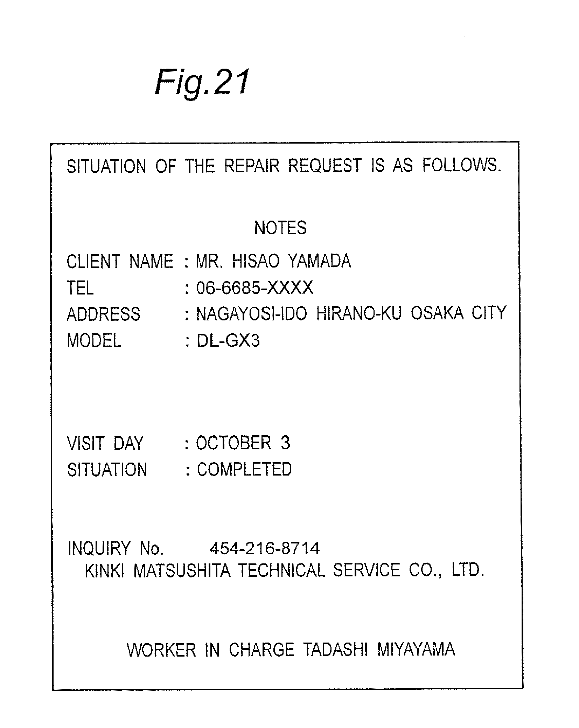

In addition, as shown in Fig. 20, when the central processing unit 11 receives the information of the working situation from the mobile terminal 51, it creates a communication sheet shown in Fig. 21 and the like according to that reported contents at S91. The central processing unit 11 acquires its destination (a FAX number, a mail address and the like of the client) based on the client DB 37 at S92 and transmits the communication sheet to the destination by FAX or e-mail at S93. Finally, it updates the client information such as the position information in the client DB37 based on the received information at S94.

As described above, according to the worker in charge command system in this embodiment, the appropriate worker in charge is determined based on the request from the client, and the information regarding the part needed in the work and the visit route are automatically created, and the information is directly transmitted to the worker in charge through the communication line. Thus, since each worker in charge can receive the work schedule without going to a base point, efficiency of the work can be improved. In addition, since there is no need to position the base point as is conventionally done, the cost for placing the base point can be reduced.

In addition, although the description has been made of the allocation of the worker in charge for the repairing request in the above, the present invention is not limited to the determination of the worker in charge for the repairing request, so that it is needles to say that the present invention can be applied to a case where a worker in charge satisfying a predetermined condition is determined and the worker in charge is informed of work contents in a general work or project.

<Embodiment 2>
The number of repair requests is varied depending on a season in general. For example, in a mountain area having cold climate, the number of repair requests is increased in winter because a heating appliance is often used as compared with in summer because an air conditioner is not often used. Meanwhile, in a city where a temperature becomes very high in summer, the number of repairing request is liable to be increased in summer because an air conditioner is often used as compared with winter. Thus, even in the same area, the number of the requests is varied depending on the season. Therefore, it is considered that the technician can be effectively arranged by setting the block such that the technician may be arranged in a flexible manner in view of the variation in number of requests depending on the season.

Thus, optimization of the block of the worker in charge will be described in view of the variation in number of requests depending on the season in this embodiment.

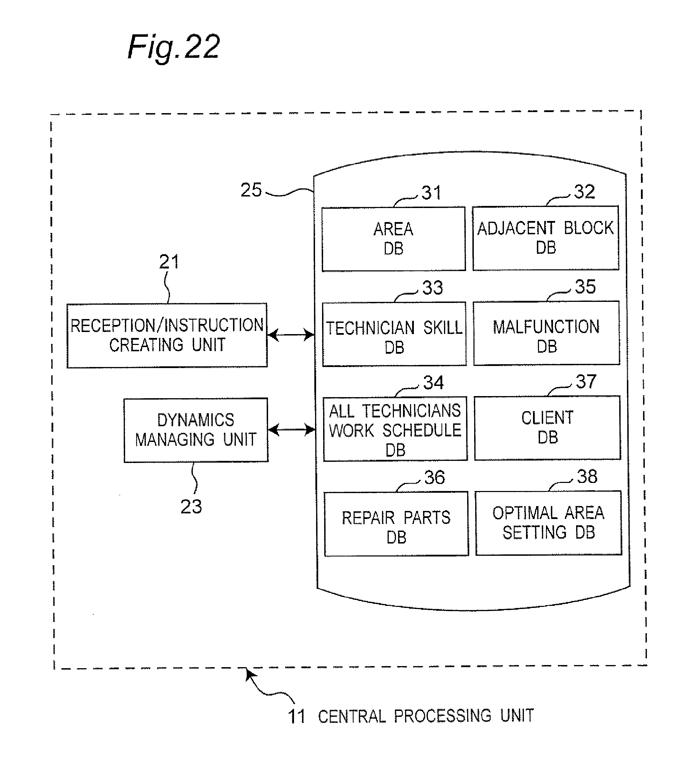

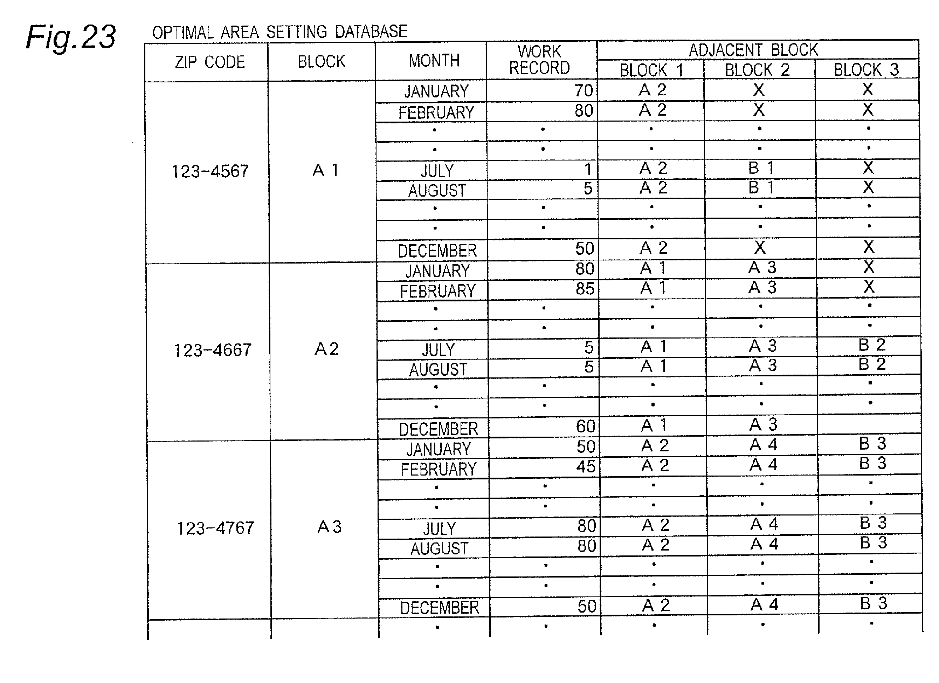

According to this embodiment, as shown in Fig. 22, an optimal area setting DB is further provided in the data recording unit 25 of the central processing unit 11 shown in Fig. 2. Fig. 23 shows a format of the optimal area setting DB and its data example.

* Optimal area setting DB (38):
An average value of the number of works for past five years is managed monthly in each block in the entire area where the work is provided. Furthermore, information of a block adjacent to each block is managed monthly. In this example, each block corresponds to the area sorted by a zip code.

In addition, although the work records are counted monthly in this example, the work records may be counted every season, for example.

Furthermore, although the average value of the number of works for past five years is used in this example, another statistics may be compiled.

Still furthermore, although the adjacent block is managed monthly with priority, it may be managed every day.

The optimal area setting DB38 is used when the data of the area DB31 and the adjacent block DB32 are updated.

The optimization process of the block in which the worker in charge is arranged will be described in detail hereinafter.

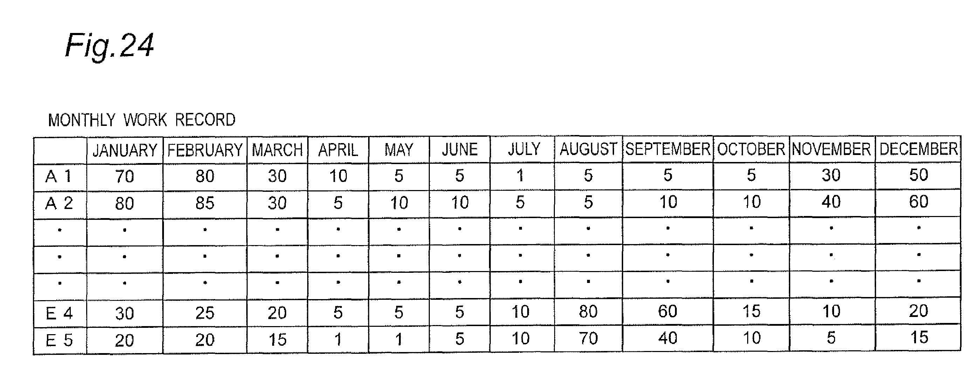

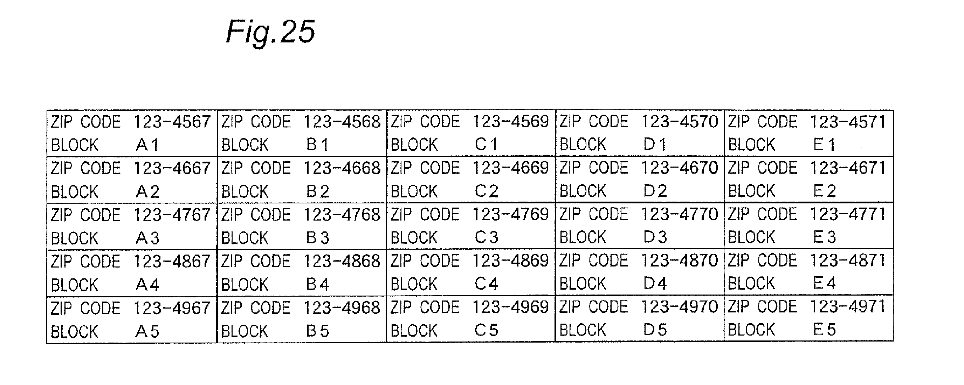

Fig. 24 shows a table of the number of monthly works in a certain area. Each value is a monthly average value for past five years. In Fig. 24, the service area is divided into blocks (area elements) A1 to A5, ..., and E1 to E5. Each block corresponds to a region sorted by a zip code. Fig. 25 shows a corresponding relation between the block and the zip code. In Fig. 25, regardless of a size of the block, only its adjacent relation is schematically shown.

It is set such that blocks A1 and A2 shown in Fig. 24 are mountain regions having cold climate, and blocks E1 and E2 are city regions in which it is very hot in summer. As can be clear from Fig. 24, in the blocks A1 and A2 of the mountain regions, the number of works is increased in winter and the number is decreased in summer. Meanwhile, in the blocks E1 and E2 of the city regions, the number of works is more in summer than that in winter. Thus, the number of required works is increased or decreased according to the season or the region. Therefore, it is necessary to optimize the area DB31 and the adjacent block DB32 by changing the area of the technician in charge monthly to equalize a workload of each technician. Thus, an area assigned to one technician is to be enlarged in the region in which the number of works is expected to be small, and more technicians are collected in the region in which the number of works is expected to be great. As a result, more speedy service can be provided.

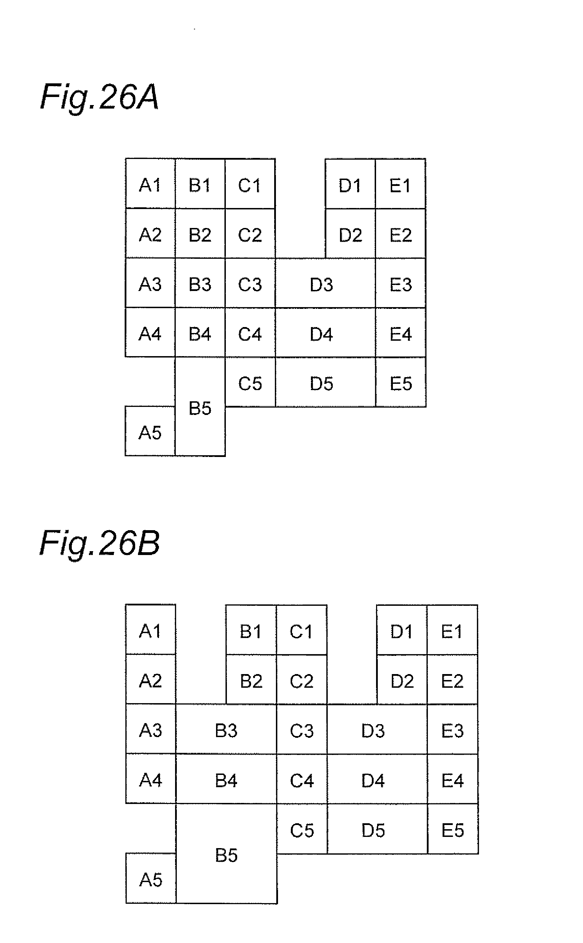

In addition, there is a case where there is no means for moving between the adjacent blocks sorted by the zip code. For example, although the technician moves by car, there is a case where it is difficult to move between the adjacent blocks because of a river having no bridge between them. According to this example, a river has no bridge between the blocks C1 and D1, the blocks C2 and D2, and the blocks A4 and A5, for example. Fig. 26A is a schematic diagram of an adjacent relation of the blocks in view of that fact. Therefore, when one technician takes charge of the plurality of blocks, it is preferable that the technician can easily move between those blocks.

In addition, the adjacent relation of the blocks is varied every season in some cases. Fig. 26B shows an adjacent relation in this area in winter (January). Roads are closed due to snow in winter in the blocks A1, A2, B1 and B2 in the mountain regions. Therefore, as shown in the drawing, travels between the blocks A1 and B1, and the blocks A2 and B2 are not easy in winter. Thus, there is a case where the movability between the blocks is varied according to the season. Therefore, when one technician takes charge of the plurality of blocks, it is preferable that the variation in movability according to the season is to be considered.

In this respect, as shown in Fig. 22, the optimal area setting DB38 is provided in the data recording unit 25 of the central processing unit 11, and the area DB31 and the adjacent block DB32 are updated every predetermined period (every month, for example). Thus, the technician can take charge of the plurality of blocks.

A description will be made of steps of the updating process of the area DB31 and the adjacent block DB32 hereinafter. This process may be performed by the reception/instruction creating unit 21 separately from the series of steps of allocating the worker in charge from the repair request receiving step S1 until the work reporting step S6 (refer to Fig. 6). If the central processing unit 11 has a timer or a calendar function (not shown) the process may be performed on the first working date every month.

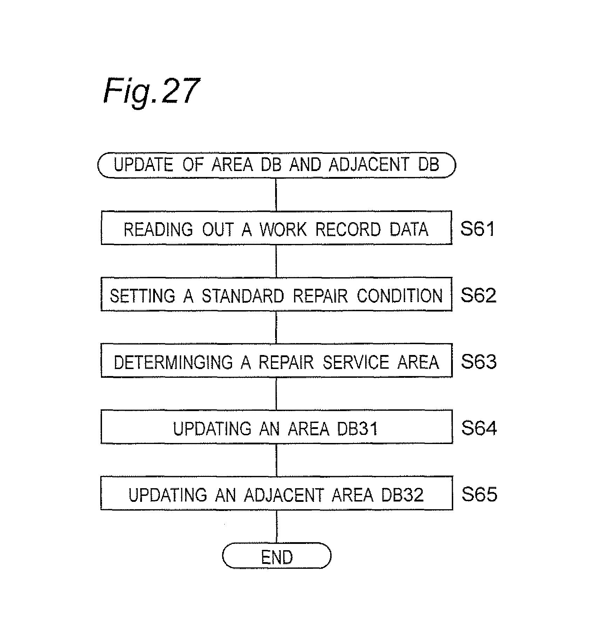

Fig. 27 shows a flow chart of the process.

At step S61, the reception/instruction creating unit 21 reads work record data for the month from the optimal area setting DB38 (refer to Fig. 23).

Then, at step S62, "the standard number of repairs" which is the number of repairs performed by one technician for one month is set. This standard number of repairs is provided by multiplying the upper limit value (8, for example) of the number of visits by one technician during one day by the number of working days of the technician for one month (20, for example), for example. The standard number of repairs may be previously set in the central processing unit 11 or an operator may input it.

Next, at step S63, the area to which the technician is assigned is constituted by the block and determined.

More specifically, monthly work record is compared with the standard number of repairs in each block to determine the number of technicians to be assigned to each block for the month. A large block is constituted by connecting the block in which the work volume is expected to be small to the similar adjacent block so that the block division in the service area is changed and the technician is assigned to the new block. These processes will be described in detail hereinafter.

First, steps of determining the number of technicians to be assigned to the block will be described. When the work record of one block is more than the standard number of repairs, the plurality of technicians are assigned to the block. The number of the technicians is determined by dividing the work record of the block by the standard number of repairs, for example. That is, when the work record of a certain block for one month is 450 and the standard number of repairs is 160, the number of the technicians required for the block is three. When the work record for one month is 80 and the standard number of repairs is 160, the number of the technician required for that block is 0.5.

Next, the process of connecting the adjacent blocks to that block to assign the technician will be described. The technician is assigned to each block based on the number of technicians required for the above block. Here, in the area having the adjacent blocks in which the number of the required technicians is less than 1, it is possible to assign one technician to the plurality of the blocks. Thus, after the number of the required technicians is found, the adjacent blocks in which the work volume is expected to be small are connected to be a large block. Thus, the technician is assigned to the large block which is changed in size. In this case, when the technician is assigned to the block, it is to be noted that the work record in the block may not exceed the sum of the standard number of repairs of the technicians assigned to that block. Hereinafter, steps of changing the block division and assigning the technician to each changed block will be described.

The number of technicians required for one block (required technician number) is calculated for all blocks.

Then, one block is selected in alphabetical order of block names and in case of some blocks having the same alphabetical names, in descending order of the number of the names, and this is set to a first select block.

When the required technician number in the select block is not less than 1, the first select block is determined as one block as it is. Meanwhile, when the required technician number in the selected block is less than 1, an appropriate adjacent block is searched so that the first select block may be connected to its adjacent block to be one block.

At this time, the adjacent block data of the optimal area setting DB is referred (refer to Fig. 23). In this adjacent block data, blocks, which are easily moved from the above block, are prioritized every month.

The required technician number of the first select block and the required technician number of its adjacent block selected according to priority are added together and when their sum is not more than 1., the first select block and the adjacent block are put together to be a second select block, and an adjacent block of the second select block is searched. At this time, two or more adjacent blocks having the same priority could exist. In this case, the adjacent block is selected in alphabetical order of its name, or when the blocks have the same alphabetical name it is selected in descending order of the number of the name. Thus, the required technician number of the second select block and the required technician number of the adjacent block are added and when their sum is not more than 1, the adjacent block is included in the second select block to be a second select block so that the second select block is updated. Meanwhile, when the sum is more than 1, the sum of the required technician number of the block included in the second select block and the required technician number of the adjacent block having the next priority are added and the same determination is made. After all of the adjacent blocks in the optical area setting database are determined, the second select block at that point becomes one work block.

Next, excluding the block which has been already included in another work block, the first select block is updated to the next block of the present first select block in alphabetical order of the block name and when the blocks have the same alphabet name, in descending order of the name number. The work block is determined using the updated first select block similar to the above. However, the block contained in another work block is excluded in determining this work block also.

According to this example, all work block comprises 25 blocks from A1 to E5 (refer to Fig. 25). Steps of determining the work block will be described taking determination of the work block in August as an example.

First, the block A1 is set to the first select block.

When it is assumed that the standard number of repairs is 80, the required technician number of the block A1 is such that 5 / 80 = 0.0625, which is less than 1. Thus, adjacent block data of the block A1 is searched from the optimal area DB and the required technician number of the block A2 having first priority, that is, 0.0625 (= 5/80) is added to the above required technician number, so that the sum is 0.125. As a result, the second select block comprises blocks A1 and A2.

Since the adjacent block having the first priority of the block A1 is A2 and the adjacent block having the first priority of the block A2 is A1, they are excluded. Thus, blocks having the second priority of the blocks A1 and A2 are block B1 and A3, respectively. Thus, when the required technician number of the second select block is added to the required technician number (1.0 = 80/80) of the block A3, that is, 0.125 + 1.0 = 1.125, the result is more than 1. Since the block B1 has the next priority, the above required technician number is added to the required technician number (not shown) of the block B1. Since the required technician number of the block B1 is 0.125, the result is such that 0.125 + 0.125 = 0.250, which is less than 1. As a result, the second select block comprises the blocks A1, A2 and B1.

Next, the adjacent block data of the blocks A1, A2 and B1 is referred. As a result, an adjacent block having the first priority is a block B2. The required technician number (not shown) of the block B2 is 0.125. Thus, the sum is such that 0.250 + 0.125 = 0.375, which is less than 1. As a result, the second select block comprises the blocks A1, A2, B1 and B2.

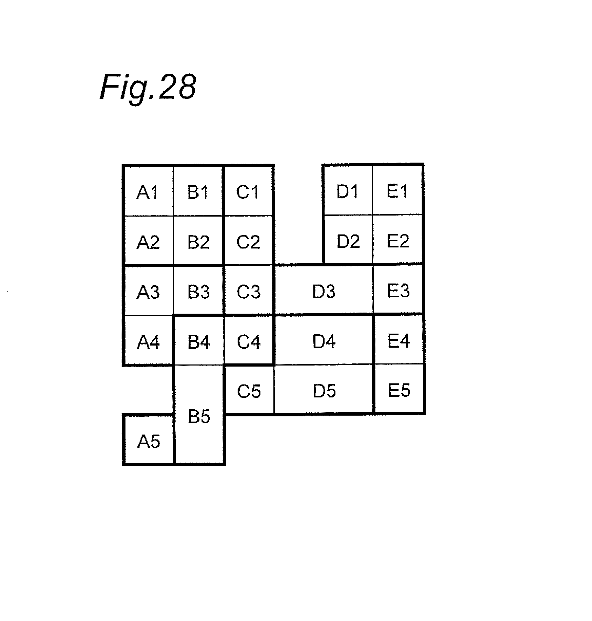

Then, the adjacent block data of the blocks A1, A2, B1 and B2 is referred and the required technician number of the adjacent block and the required technician number of the second select block are added. However, there is no block having the required technician number which becomes 1 with the required technician number of the second select block in the adjacent blocks in the adjacent block data. Thus, one work block comprises four blocks A1, A2, B1 and B2 (refer to Fig. 28).

Then, the first select block is updated. Although the block to be selected next to the block A1 is A2, since the block A2 is included in the already determined work block, the block A3 is selected as the first select block. In a similar manner, the processes are performed until a block E5.

Fig. 28 is a schematic diagram of the work blocks determined in the above steps. One technician takes charge of a section surrounded by a thick line in Fig. 28. In other words, one block comprises different zip codes. At this time, the combination of the blocks in the service area is determined based on the adjacent block data of the optimal area setting DB. Therefore, the service area of the technician is constituted by combination of the blocks in which the technician can easily move. As shown in the drawing, one work block does not comprise the block to which traveling is difficult.

In addition, to prevent the work block for that one technician is responsible for from becoming large, the maximum number of blocks to which one technician belongs may be set and the work block is determined so that its number of blocks may not exceed the maximum number of blocks.

Based on this result, the central processing unit 11 allocates the required number of technicians to each block according to an order of the technician codes (refer to Fig. 4C). Thus, the work volume of each technician can be averaged through a year and each technician can work effectively.

At this time, the central processing unit 11 may allocate the technician referring to the skill of the technician such that more appropriate technician can be allocated. In addition, the central processing unit 11 may allocate the technician in view of a living place of the technician such that the technician can take charge of the block close to the living place.

Then, at step S64, the area DB31 (refer to Fig. 4A) is updated based on the result at the step S63. when the work block for one technician comprises the plurality of blocks, the same worker in charge (technician) is found in the plurality of blocks in the data of the worker in charge on the same day.

Next, at step S65, the adjacent block DB32 (refer to Fig 4B) is updated. When the work block comprises the plurality of blocks, the block adjacent to the work block (comprising the plurality of zip codes in some cases) is searched and prioritized in the adjacent block data of the adjacent block DB32 referring to the adjacent block data of the optimal area setting database. The adjacent block of the adjacent block DB 32 is found in each block of the adjacent block DB32 such that another adjacent work block is found in one work block comprising the plurality of zip codes in some cases is found.

In addition, although the database is updated monthly based on the monthly data in this example, it may be updated at another time interval such as every day. Furthermore, the updating interval may be varied such that it may be one month or two months case by case. When it is updated every day, the work block can be set in view of statistics data of daily traffic situation or traffic jam expected on a special day.

<Embodiment 3>
In this embodiment, a configuration and an operation in which a mobile phone is used as the mobile terminal 51 in the embodiment 1 will be described in detail hereinafter.

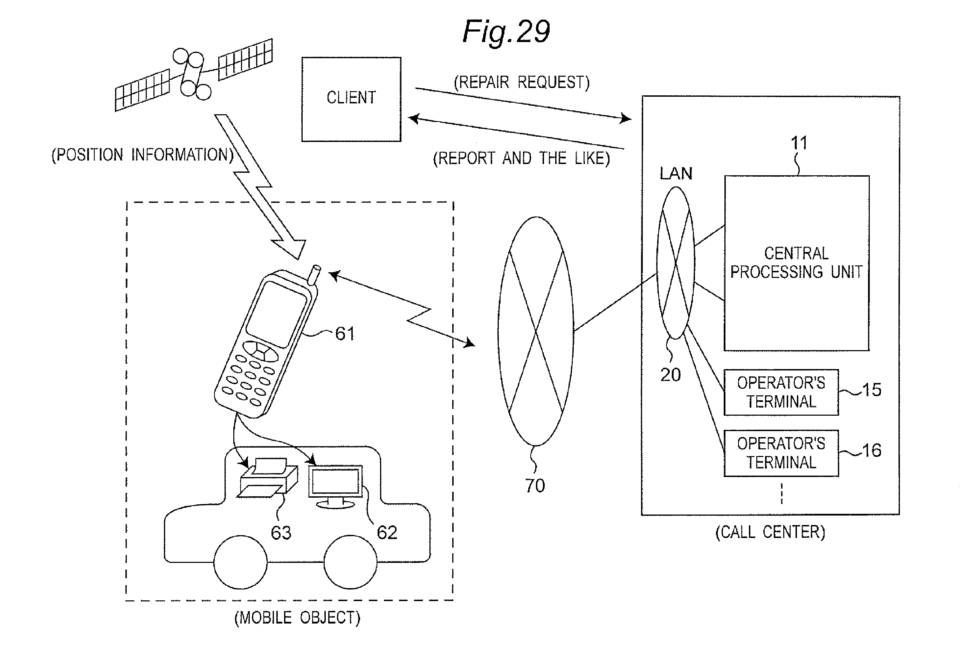

Fig. 29 shows the configuration of a system according to this embodiment. A mobile phone 61 incorporates a GPS function, so that it can acquire position information of a current position, that is, latitude and longitude information. In addition, the mobile phone 61 can carry out a predetermined application program which has been previously installed or downloaded occasionally through a predetermined communication line 70. With the program, functions of the dynamics information transmitter 53 and the navigation system 54 shown in Fig. 1 are implemented. Thus, the mobile phone 61 implements the same function as those of the dynamics information transmitter 53 and the navigation system 54 shown in Fig. 1 without them.

Namely, the mobile phone 61 can transmit work information by pressing a button through the communication line 70 with the application program executed in the mobile phone 61, and has the same function as that of a car navigation system to navigate to a work place by displaying a rout thereto based on inputted data of the work place. In addition, the mobile phone 61 can receive position information of the work place from the central processing unit 11 through the communication line 70.

Furthermore, a mobile display 62 and a mobile printer 63 may be connected to the mobile phone 61 in this configuration. The mobile display 62 comprises a display screen larger than a display of the mobile phone 61 and the display screen can display information more than that on the display of the mobile phone 61. However, it is not necessary to say that the present invention can be implemented with the display of the mobile phone 61 only. The mobile printer 63 is used for printing various kinds of forms at a job site. The configuration other than the above is the same as that shown in Fig. 1.

Then, a description will be made of a process in the system configuration comprising the mobile phone 61 according to this embodiment.

Similar to the case using the mobile terminal 51 and the like in the embodiment 1, repair information comprising information on repairing contents, a part for repairing and the like and map information showing a visiting route are prepared for each worker in charge and each work.

Such information is transmitted to the mobile phone 61 of the technician through the communication line 70 on the next morning. Namely, each technician can receive and ascertain a work schedule on that day by turning on the mobile phone 61 on the work morning before starting the work.

Furthermore, by turning on the devices 62 and 63 in a car, the information can be enlarged on the display screen to ascertain it or it can be printed out by the printer. Processes of the mobile terminal 61 and the display 62 of the technician will be described hereinafter.

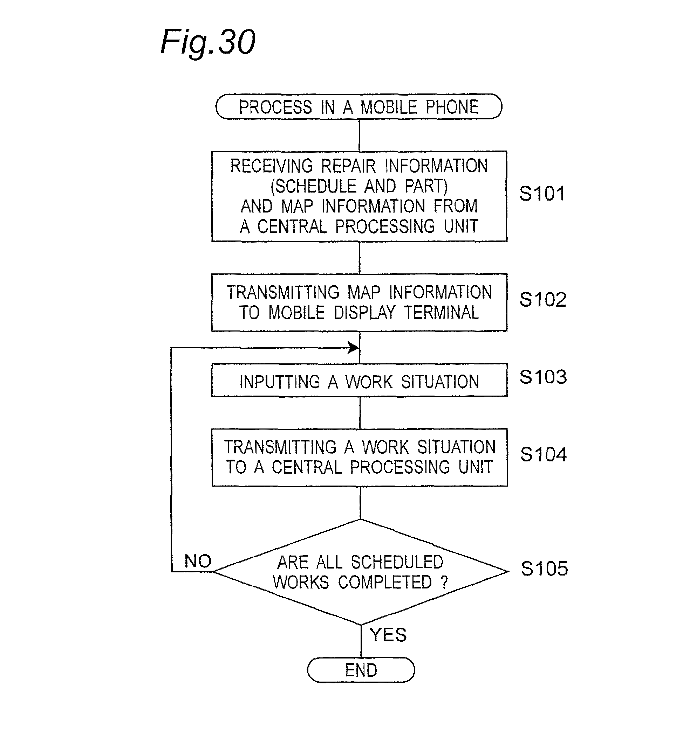

The process of the mobile terminal regarding reception of the repair information and the map information, and input of the work contents after the work is completed will be described with reference to Fig. 30.

When the technician operates the mobile phone 61 to receive the repair information and the map information, the mobile terminal 61 accesses the central processing unit 11 through the communication line 70 and receives the repair information and the map information prepared for each worker in charge at S101. The map information comprises text information of a client name and a client address (work place to visit), and position information (latitude and longitude) of the work place arranged according to a visit order for each client to visit on that day.

When the mobile phone 61 completes the reception of the repair information and the map information, it transmits the position information (latitude and longitude information) of the work place in the map information to the mobile display 62. At the same time, the navigation system information in the mobile phone 61 is also transferred to the mobile display 62, so that the route to the work place is shown in order at S102. The received repair information can be ascertained on the mobile phone 61 or the mobile display 62. Fig. 16 is a view of a display example of schedule information displayed on the mobile display 62.

When the technician selects one client on this screen, detailed information of the selected client is displayed as shown in Fig. 17. Similarly, the technician can ascertain a necessary parts list on the screen. The above process is performed on the mobile phone 61 before the work.

Then, the mobile phone 61 and the mobile display 62 provide navigation information by an audio guidance or an image display. The technician drives to the work place according to the information and performs the work at the work place. After the work is completed at the work place, the technician returns to the service car and inputs a working situation from the mobile phone 61. This inputted content is displayed on the mobile display 62. Fig. 18 shows an input screen of the working situation displayed on the mobile display 62. Since the working situations are finely sorted and coded, the technician only inputs a corresponding code at a predetermined place. When the work is not completed, an item such as its cause and reason, and appointment of the next visit is inputted.

When the input of the working situation on the mobile phone 61 at S103 is completed, that information is transmitted to the central processing unit 11 through the communication line 70 at S104. At this time, the information of transmitted point, that is, the latitude and longitude information of the service car can be ascertained by the central processing unit 11 with the GPS function in the mobile phone 61.

At this time, it is to be noted that the transmitted position information is not the position information of the work place (the client's house) but the position information of a parking lot of the service car. The central processing unit 11 updates the client DB37 using this position information. Thus, when the parking lot of the service car is stored as the position information of the client, the following merits are provided. Namely, when the technician drives to visit the client's house, since a space for parking the car does not always exist at the place of the client's house, the car is parked in the space close to the client's house in many cases. In this case, since the parking space has been stored as the information, it is not necessary to search the parking space on the next visit, so that the time and effort spent on searching the parking space can be reduced.

The above processes are performed for all scheduled clients at S73 to S75.

In addition, the mobile phone 61 may have the same function as that of the above dynamics information transmitter 53. In this case, when a certain button showing the present dynamics is pressed, the information of that button is transmitted to the central processing unit 11 together with the position information (latitude and longitude) acquired by the GPS. In addition, the mobile phone 61 may transmit the information of the pressed button and the position information (latitude and longitude) to the central processing unit 11 periodically (every 3 to 5 minutes, for example). The central processing unit 11 can grasp the location and the working situation of each technician in real time by receiving the above information. Industrial applicability

The present invention is advantageously applied to a system which automatically determines a worker in charge who satisfies a predetermined condition and automatically transmits work contents to the worker in charge for a service work or a project.

## Claims

1. A worker in charge command system comprising a central processing unit,
wherein the central processing unit includes:
inputting means for inputting a work request containing at least a work content and a work place;
worker in charge determining means for determining a worker in charge who satisfies a predetermined condition based on the work content for each received work request;
article determining means for determining an article needed for the requested work;
work information creating means for creating work information containing the work content and the article needed for the work every working day for each worker in charge;
map information creating means for creating map information comprising position information of the work place and a visit order of the work places every working day in association with the work information; and
transmitting means for transmitting the created work information and the map information to each worker in charge.

2. The worker in charge command system according to claim 1,
wherein the work contains a repairing work for an appliance.

3. The worker in charge command system according to claim 1, wherein the predetermined condition in the worker in charge determining means is a skill of the worker in charge required for completing the work.

4. The worker in charge command system according to claim 1 further comprising means for dividing a service area into a plurality of blocks, assigning the worker in charge to each block previously and managing the worker in charge,
wherein the worker in charge determining means searches a worker in charge who satisfies the predetermined condition in a block adjacent to a work block again when the worker in charge who satisfies the predetermined condition cannot be determined in the work block.

5. The worker in charge command system according to claim 4,
wherein a geographical range of the block and the number of worker in charge assigned to each block previously are varied after a predetermined period.

6. The worker in charge command system according to claim 5 further comprising means for storing data in which the number of past works in each block is counted every predetermined period,
wherein at least one of the geographical range of the block and the number of workers in charge assigned to the block is determined based on the counted data.

7. The worker in charge command system according to claim 5,
wherein the predetermined period is one month.

8. The worker in charge command system according to claim 5,
wherein the geographical range is determined based on a zip code.

9. The worker in charge command system according to claim 1 further comprising means for managing the number of works handled by each worker in charge every day,
wherein an upper limit of the number of works handled by one worker in charge during one day is provided in the worker in charge determining means.

10. The worker in charge command system according to claim 1 further comprising means for managing a probability of completing the work with the article with respect to each article,
wherein the article determining means selects one or more articles such that a total probability of completing the work may become a predetermined value or more.

11. The worker in charge command system according to claim 1,
wherein the work request contains a desired date and time, and
the map information creating means determines the visit order based on a location of the work place and the desired time.

12. The worker in charge command system according to claim 1 further comprising a mobile terminal including means for receiving the work information and the map information transmitted from the transmitting means and means for inputting and transmitting predetermined information when the worker in charge completes the work.

13. The worker in charge command system according to claim 12,
wherein the mobile terminal is a mobile phone.

14. The worker in charge command system according to claim 12,
wherein the central processing unit includes:
storing means for storing the position information of the work place;
means for receiving the information transmitted from the worker in charge through the mobile terminal when the work is completed together with position information of a place from which the information is transmitted; and
means for updating the position information stored in the storing means with the received position information.

15. A worker in charge command method comprising:
a receiving step of receiving a work request containing at least a work content and a work place;
a worker in charge determining step of determining a worker in charge who satisfies a predetermined condition based on the work content for each received work request;
an article determining step of determining an article needed for the requested work;
a work information creating step of creating work information containing the work content and the article needed for the work every working day for each worker in charge;
a map information creating step of creating map information containing position information of the work place and a visit order of the work places every working day in association with the work information; and
a transmitting step of transmitting the created work information and the map information to each worker in charge.

16. The worker in charge command method according to claim 15,
wherein the work contains a repairing work for an appliance.

17. The worker in charge command method according to claim 15,
wherein the predetermined condition in the worker in charge determining step is a skill of the worker in charge required for completing the work.

18. The worker in charge command method according to claim 15 further comprising a dividing step of dividing a service area into a plurality of blocks and the worker in charge is assigned to each block previously,
wherein the worker in charge determining step searches a worker in charge who satisfies the predetermined condition in a block adjacent to a work block again when the worker in charge who satisfies the predetermined condition cannot be determined in the work block.

19. The worker in charge command method according to claim 18,
wherein a geographical range of the block and the number of workers in charge assigned to each block previously are varied after a predetermined period.

20. The worker in charge command method according to claim 19,
wherein at least one of the geographical range of the block and the number of workers in charge assigned to the block is determined based on data in which the number of past works in each block is counted every predetermined period.

21. The worker in charge command method according to claim 19,
wherein the predetermined period is one month.

22. The worker in charge command method according to claim 19,
wherein the geographical range is determined based on a zip code.

23. The worker in charge command method according to claim 15,
wherein the number of works handled by each worker in charge is managed every day, and an upper limit of the number of works handled by one worker in charge during one day is provided at the worker in charge determining step.

24. The worker in charge command method according to claim 15 further comprising a probability setting step of setting a probability of completing the work with the article with respect to each article,
wherein the article determining step selects one or more articles such that a total probability of completing the work may become a predetermined value or more.

25. The worker in charge command method according to claim 15,
wherein the work request contains a desired date and time, and
the map information creating step determines the visit order based on a location of the work place and the desired time.

26. The worker in charge command method according to claim 15 further comprising:
a storing step of storing the position information of the work place in storing means;
a receiving step of receiving the information transmitted from the worker in charge when the work is completed together with position information of a place from which the information is transmitted; and
a updating step of updating the position information stored in the storing means with the received position information.

27. A program for implementing the method according to any one of claims 15 to 26 with a computer.
